# DEMANDE DE BREVET EUROPEEN

(11) **EP 4 270 805 A1**
(43) Date de publication de la demande: **01.11.2023**
(21) Numéro de dépôt: 22170762.3
(22) Date de dépôt: 29.04.2022
(51) Int. Cl.: H04B 5/00

(54) **TRANSPONDEUR MUNI D'UNE ANTENNE SPIRALE**

(71) Demandeur: The Swatch Group Research and Development Ltd, 2074 Marin (CH)
(72) Inventeur: RANDJELOVIC, Zoran, 2035 Corcelles (CH); MASPOLI, Jérôme, 3236 Gampelen (CH)
(74) Mandataire: ICB SA

(57) **Abrégé**

L'invention se rapporte à un transpondeur (1) comportant un système électronique (3) de gestion de l'envoi et de la réception de données et une antenne spirale (2), l'antenne spirale (2) comportant un ruban enroulé formant une pluralité de spires (11), le système électronique (3) étant connecté à l'antenne spirale (2) par deux points de connexion (6) agencées sur le ruban, caractérisé en ce que les spires (11) comprises entre les deux points de connexion (6) forment un premier ensemble de spires (4), l'antenne spirale (2) comportant un deuxième ensemble de spires (5) s'étendant en-dehors des points de connexion (6).

L'invention se rapporte aussi à un dispositif électronique, notamment une pièce d'horlogerie comportant un tel transpondeur (1).

## Description

### Domaine technique de l'invention

L'invention concerne le domaine des transmissions de l'information et des télécommunications, et en particulier les transpondeurs comportant une antennes d'émission et/ou de réception.

### Arrière-plan technologique

Les transpondeurs sont des appareils électroniques configurés pour transmettre et/ou recevoir des données. Il existe des transpondeurs passifs de type RFID (pour Radio Frequency Identification en anglais), qui sont souvent destinés à coder et enregistrer des produits.

D'autres transpondeurs passifs sont par exemple utilisés dans les terminaux et cartes bancaires, par exemple pour un paiement sans contact. Ces transpondeurs sont généralement de type NFC (pour Near Field Communication en anglais), et permettent un transfert de données à faible distance.

La communication s'établie entre deux terminaux, chaque terminal comprenant un système électronique pour gérer et enregistrer les données, ainsi qu'une antenne pour transmettre et recevoir les données de l'autre terminal.

L'antenne a une grande importance pour déterminer la distance de fonctionnement de l'émission/réception entre les terminaux, mais ses dimensions doivent être très réduites pour limiter l'encombrement des terminaux. A cette fin, il existe des antennes en forme de portion de spirale, qui permettent d'avoir une longueur d'antenne suffisante dans un minimum de place. Le nombre de spires détermine l'inductance de l'antenne. Les points de connexion du système électronique sont agencés aux deux extrémités de la portion de spirale, c'est-à-dire à l'extrémité externe et à l'extrémité interne de la portion de spiral pour avoir une inductance suffisante et pour arriver à une distance de communication maximale.

Quand cela ne suffit pas, une deuxième antenne est agencée en parallèle de la première antenne, afin d'augmenter la distance de communication. La deuxième antenne fonctionne comme un circuit résonant, de sorte que la fréquence nominale de l'ensemble des deux antennes ne change pas par rapport à la fréquence nominale de la portion de spirale seule. Grâce à la deuxième antenne, on obtient une augmentation de la distance de communication.

Cependant, l'amélioration est limitée et n'est pas toujours suffisante pour les applications que l'on recherche.

### Résumé de l'invention

L'invention a pour but de remédier aux inconvénients précités, et vise à fournir un transpondeur comportant un système électronique de gestion de l'envoi et de la réception de données et d'une antenne spirale, l'antenne spirale comportant un ruban enroulé formant une pluralité de spires, le système électronique étant connecté à l'antenne spirale par deux points de connexion agencés sur le ruban.

Le transpondeur est remarquable en ce que les spires comprises entre les deux points de connexion forment un premier ensemble de spires, l'antenne spirale comportant un deuxième ensemble de spires s'étendant en-dehors des points de connexion.

Le deuxième ensemble de spires, qui s'étend en-dehors des points de connexion du système électronique, permet d'améliore la distance de communication de l'antenne spirale de 10 à 20%. Ainsi, le transpondeur peut répondre à des normes de fonctionnement spécifiques tout en conservant un encombrement réduit.

Grâce à l'invention, on peut utiliser des dispositifs électroniques particuliers, par exemple une pièce d'horlogerie de type montre, pour des utilisations de transferts de données de type NFC. En particulier, cette montre peut être munie d'un système de paiement utilisable comme une carte bancaire de paiement à faible distance.

Selon une forme de réalisation particulière de l'invention, le premier ensemble de spires comprend les spires externes de l'antenne-spirale et le deuxième ensemble de spires comprend les spires internes de l'antenne-spirale.

Selon une forme de réalisation particulière de l'invention, le premier ensemble de spires et le deuxième ensemble de spires sont liés, de manière à ce que l'antenne-spirale soit continue.

Selon une forme de réalisation particulière de l'invention, le premier ensemble de spires et le deuxième ensemble de spires sont disjoints, de manière à ce que l'antenne-spirale soit discontinue, une césure étant agencée à la frontière du premier ensemble de spires et du deuxième ensemble de spires.

Selon une forme de réalisation particulière de l'invention, le premier ensemble de spires et le deuxième ensemble de spires s'étendent dans un même plan.

Selon une forme de réalisation particulière de l'invention, le deuxième ensemble est libre de connexion.

Selon une forme de réalisation particulière de l'invention, le transpondeur comprend un circuit résonnant, le circuit résonnant comportant le deuxième ensemble de spires.

Selon une forme de réalisation particulière de l'invention, le circuit résonnant comporte une capacité connectée au deuxième ensemble de spires par deux points de connexion, de sorte qu'un troisième ensemble de spires internes soit agencé entre les deux points de connexion de la capacité.

Selon une forme de réalisation particulière de l'invention, le deuxième ensemble de spires internes comprend un quatrième ensemble de spires internes s'étendant au-delà du troisième ensemble de spires internes

Selon une forme de réalisation particulière de l'invention, le quatrième ensemble de spires internes est libre de connexion.

Selon une forme de réalisation particulière de l'invention, le troisième ensemble de spires internes et le quatrième ensemble de spires internes sont reliés de sorte que le deuxième ensemble de spires soit continu.

Selon une forme de réalisation particulière de l'invention, le transpondeur est du type NFC, notamment pour servir de moyen de paiement.

L'invention se rapporte également à un dispositif électronique comprenant un tel transpondeur.

Selon une forme de réalisation particulière de l'invention, le dispositif électronique est une pièce d'horlogerie, telle une montre.

Selon une forme de réalisation particulière de l'invention, l'antenne spirale forme un cadran de la pièce d'horlogerie.

### Brève description des figures

Les buts, avantages et caractéristiques de la présente invention apparaîtront à la lecture de plusieurs formes de réalisation données uniquement à titre d'exemples non limitatifs, en référence aux dessins annexés dans lesquels :
- la figure 1 montre une représentation schématique d'une vue de dessus d'un premier mode de réalisation d'un transpondeur selon l'invention,
- la figure 2 montre une représentation schématique d'une vue de dessus d'un deuxième mode de réalisation d'un transpondeur selon l'invention, et
- la figure 3 montre une représentation schématique d'une vue de dessus d'une montre comportant un transpondeur selon l'invention.

### Description détaillée de l'invention

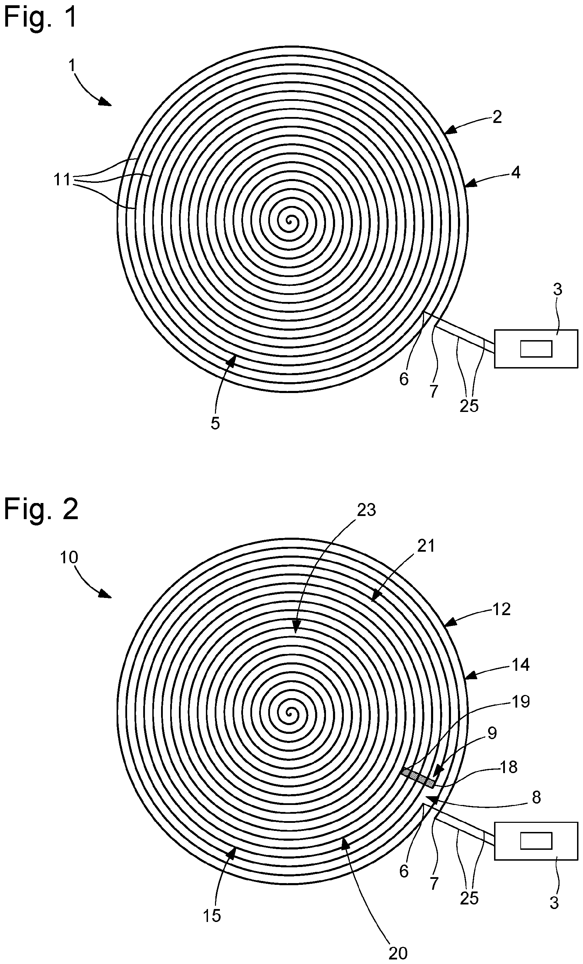

Sur les figures 1 et 2, sont représentés deux modes de réalisation d'un transpondeur 1, 10 comportant un système électronique 3 de gestion de l'envoi et de la réception de données et une antenne spirale 2, 12. Le protocole de communication est par exemple de type NFC (pour Near Field Communication en anglais), ou CCP en français (pour Communication en Champs Proche). Cette technologie est utilisée en particulier pour les moyens de paiement, par exemple pour les cartes de paiement, qui peuvent payer à distance à l'aide de terminaux dits « sans contact ».

L'antenne spirale 2, 12 comporte un ruban enroulé formant une pluralité de spires 11.

Le système électronique est par exemple un circuit intégré muni d'une puce configurée pour gérer les communications de type NFC. Le système électronique 3 est connecté à l'antenne spirale 2 par deux points de connexion 6, 7 agencées sur le ruban. Les spires 11 comprises entre les deux points de connexion 6, 7 forment un premier ensemble de spires 4, 14.

Selon l'invention, l'antenne spirale 2, 12 comporte un deuxième ensemble de spires 5, 15 s'étendant en-dehors des points de connexion 6, 7.

Le deuxième ensemble de spires 5, 15 comprend plusieurs spires adjacentes les plus concentriques de l'antenne spirale 2, 12, et dont le rayon de courbure est le plus faible. Sur la figure 1, le deuxième ensemble de spires 5, 15 comprend toutes les spires internes depuis le point de connexion le plus concentrique de l'antenne spirale 2, 12. Ainsi, le deuxième ensemble de spires 5, 15 comprend ici au moins vingt-cinq spires. Elle peut bien-sûr en comprendre moins ou davantage, par exemple une dizaine, une vingtaine, une trentaine de spires ou plus.

De préférence, dans ces modes de réalisation, le premier ensemble de spires 4, 14 comprend les spires 11 externes de l'antenne-spirale 2 et le deuxième ensemble de spires 5, 15 comprend des spires 11 internes de l'antenne-spirale 2, 12.

Le premier ensemble de spires 4, 14 et le deuxième ensemble de spires 5, 15 s'étendent sensiblement dans un même plan. Ainsi, l'antenne spirale 2, 12 s'étend sensiblement dans le même plan afin de minimiser l'épaisseur de l'antenne-spirale 2, 12. Toutes les spires 11 de l'antenne spirale 2, 12 sont enroulées dans le même plan.

Le premier ensemble de spires 4, 14 comprend plusieurs spires adjacentes les plus excentrées de l'antenne spirale 2, 12, et dont le rayon de courbure est le plus élevé. Sur les figures 1 et 2, le premier ensemble de spires 4, 14 comprend deux spires. Le premier ensemble de spires 4, 14 peut bien-sûr en comprendre davantage, par exemple trois, quatre, cinq ou plus, ou bien une seule spire ou une partie de spire.

Les deux points de connexion 6, 7 sont de préférence agencés aux deux extrémités du premier ensemble de spires 4, 14 externes. Autrement dit, les deux points de connexion 6, 7 sont respectivement agencés au point le plus excentré et au point le plus concentrique du premier ensemble de spires 4, 14.

Une paire de fils 25 relient les deux points de connexion 6, 7 au système électronique 3. Les fils 25 sont par exemple soudés ou collés aux points de connexion 6, 7 et au circuit intégré.

Dans le premier mode de réalisation représentés sur la figure 1, le premier ensemble de spires 4 et le deuxième ensemble de spires 5 sont liés, de manière à ce que l'antenne-spirale 2 soit continue. Ainsi, on a une antenne spirale continue 2 formée des deux ensembles de spires.

En outre, le deuxième ensemble de spires 5 est libre de connexion. Autrement dit, il n'existe pas de connexion sur le deuxième ensemble de spires 5, que cela soit avec le système électronique 3 ou un autre composant.

Le deuxième ensemble de spires 5 permet d'améliorer la portée de la transmission de données à distance entre ce transpondeur 1 et un autre transpondeur ou un terminal. En effet, le deuxième ensemble de pires 5 permet d'accumuler plus d'énergie que le premier ensemble de spires 4 seul. Cette énergie supplémentaire permet ainsi d'augmenter la distance de transmission.

Le deuxième mode de réalisation de la figure 2 montre une antenne-spirale 12 dans laquelle le premier ensemble de spires 14 et le deuxième ensemble de spires 15 sont disjoints, de manière à ce que l'antenne-spirale 2 soit discontinue. Autrement dit, l'antenne-spirale 12 comprend deux parties distinctes séparées par une césure 8 agencée à la frontière du premier ensemble de spires 14 et du deuxième ensemble de spires 15. Ainsi, les deux ensembles de spires 14, 15 ne sont pas directement reliés l'un à l'autre.

La césure 8 est de préférence disposée après le point de connexion 6 le plus concentrique des deux points de connexion 6, 7. Ainsi, les deux points de connexion 6, 7 ne sont donc pas reliés au deuxième ensemble de spires 15.

Dans ce mode de réalisation, le transpondeur 10 comprend un circuit résonnant 20. Le circuit résonnant 20 comporte le deuxième ensemble de spires 15.

En outre, le circuit résonnant 20 comporte une capacité 9 connectée au deuxième ensemble de spires 15 La capacité 9 est connectée à deux points de connexion 18, 19. Un point de connexion 18 est disposé à l'extrémité de la spire interne 11 la plus excentrée du deuxième ensemble de spires 15. L'autre point de connexion 19 est disposée sur une spire interne 11 plus concentrique, de manière à ce que plusieurs spires internes 11 soient comprises entre les deux points de connexion 18, 19 de la capacité 9. La capacité 9 est agencée au-delà de la césure 8 entre le premier 14 et le deuxième ensemble de spires 15.

Ainsi, un troisième ensemble de spires internes 21 est agencé entre les deux points de connexion 18, 19 de la capacité 9.

Une partie seulement des spires 11 du deuxième ensemble de spires 15 appartient au troisième ensemble de spires internes 21, car le point de connexion 19 le plus concentrique de la capacité 9, n'est pas agencé au centre de l'antenne spirale 12.

Ainsi, le deuxième ensemble de spires internes 15 comprend un quatrième ensemble de spires internes 23 s'étendant au-delà du troisième ensemble de spires internes 21. Le quatrième ensemble de spires internes 23 s'étend concentriquement au-delà des points de connexion de la capacité 8, et correspond à l'ensemble de spires internes du deuxième ensemble de spires internes 15 moins le troisième ensemble de spires internes 21.

Le troisième ensemble de spires internes 21 et le quatrième ensemble de spires internes 23 sont reliés, de sorte que le deuxième ensemble de spires 15 soit continu.

Le quatrième ensemble de spires internes 23 est libre de connexion. Autrement dit, il n'existe pas de connexion sur le quatrième ensemble de spires 5, que cela soit avec le système électronique 3 ou un autre composant.

Grâce au circuit résonnant 20, ce mode de réalisation du transpondeur permet d'augmenter encore davantage la portée du transfert de données de 30 à 40%.

Un tel transpondeur peut être utilisé dans un produit électronique. Par exemple, une pièce d'horlogerie configurée pour effectuer des paiements comme une carte bancaire. Le transpondeur de type NFC permet par exemple le paiement à faible distance, appelé « sans contact ».

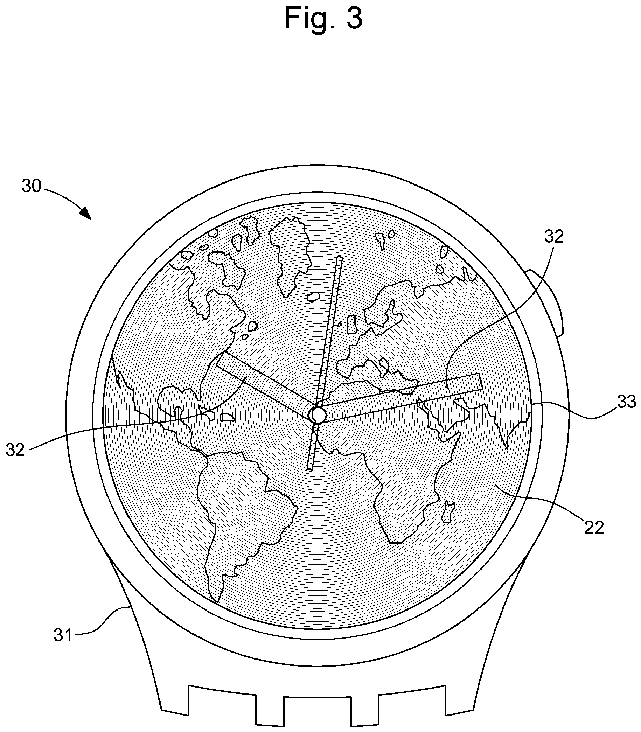

Sur la figure 3, est représentée une montre 30 comprenant un transpondeur selon l'invention. La montre 30 comprend un boîtier 31, dans lequel est logé un mouvement d'horlogerie, de préférence un mouvement électronique, et des aiguilles 32 pour indiquer l'heure. Le transpondeur est également disposé dans le boîtier 31. Dans ce mode de réalisation, l'antenne spirale 22 du transpondeur est utilisée comme cadran de la montre 30. L'antenne spirale 22 est agencée sous la glace 33 de la montre 30. Les aiguilles 32 se déplacent au-dessus de l'antenne-spirale 22, l'antenne-spirale 22 étant visible à travers la glace de 33 par un utilisateur. Le système électronique 3, les points de contact, et la capacité dans le cas du deuxième mode de réalisation, sont agencés sous l'antenne-spirale 22 pour être cachés.

Optionnellement, la surface supérieure de l'antenne-spirale 22 comprend un motif, dans un but de décoration ou pour indiquer des indices d'heures par exemple.

Naturellement, l'invention n'est pas limitée aux modes de réalisation de transpondeur et de dispositif électronique décrits en référence aux figures et des variantes pourraient être envisagées sans sortir du cadre de l'invention.

## Revendications

1. Transpondeur (1, 10) comportant un système électronique (3) de gestion de l'envoi et de la réception de données et une antenne spirale (2, 12, 22), l'antenne spirale (2, 12, 22) comportant un ruban enroulé formant une pluralité de spires (11), le système électronique (3) étant connecté à l'antenne spirale (2) par deux points de connexion (6, 7) agencées sur le ruban, **caractérisé en ce que** les spires (11) comprises entre les deux points de connexion (6, 7) forment un premier ensemble de spires (4, 14), l'antenne spirale (2, 12, 22) comportant un deuxième ensemble de spires (5, 15) s'étendant en-dehors des points de connexion (6, 7).

2. Transpondeur selon la revendication 1, **caractérisé en ce que** le premier ensemble de spires (4) comprennent les spires (11) externes de l'antenne-spirale (2) et le deuxième ensemble de spires (5) comprennent les spires (11) internes de l'antenne-spirale (2).

3. Transpondeur selon la revendication 1 ou 2, **caractérisé en ce que** le premier ensemble de spires (4) et le deuxième ensemble de spires (5) sont liés, de manière à ce que l'antenne-spirale (2) soit continue.

4. Transpondeur selon la revendication 1 ou 2, **caractérisé en ce que** le premier ensemble de spires (14) et le deuxième ensemble de spires (15) sont disjoints, de manière à ce que l'antenne-spirale (2) soit discontinue, une césure (8) étant agencée à la frontière du premier ensemble de spires (14) et du deuxième ensemble de spires (15).

5. Transpondeur selon l'une, quelconque, des revendications précédentes, **caractérisé en ce que** le premier ensemble de spires (14) et le deuxième ensemble de spires (15) s'étendent dans un même plan.

6. Transpondeur selon l'une, quelconque, des revendications précédentes, **caractérisé en ce que** le deuxième ensemble (5) est libre de connexion.

7. Transpondeur selon l'une, quelconque, des revendications 1 à 5, **caractérisé en ce qu'**il comprend un circuit résonnant (20), le circuit résonnant (20) comportant le deuxième ensemble de spires (15).

8. Transpondeur selon la revendication 7, **caractérisé en ce que** le circuit résonnant (20) comporte une capacité (9) connectée au deuxième ensemble de spires (15) par deux points de connexion (18, 19), de sorte qu'un troisième ensemble de spires internes (21) soit agencé entre les deux points de connexion (18, 19) de la capacité (9).

9. Transpondeur selon la revendication 7 ou 8, **caractérisé en ce que** le deuxième ensemble de spires internes (15) comprend un quatrième ensemble de spires internes (23) s'étendant au-delà du troisième ensemble de spires internes (21).

10. Transpondeur selon la revendication 9, **caractérisé en ce que** le quatrième ensemble de spires internes (23) est libre de connexion.

11. Transpondeur selon la revendication 9 ou 10, **caractérisé en ce que** le troisième ensemble de spires internes (21) et le quatrième ensemble de spires internes (23) sont reliés de sorte que le deuxième ensemble de spires (15) soit continu.

12. Transpondeur selon l'une, quelconque, des revendications précédentes, **caractérisé en ce qu'**il est du type NFC, notamment pour servir de moyen de paiement.

13. Dispositif électronique comprenant un transpondeur (1, 10) selon l'une, quelconque, des revendications précédentes.

14. Dispositif électronique selon la revendication 13, **caractérisé en ce qu'**il est une pièce d'horlogerie, telle une montre.

15. Dispositif électronique selon la revendication 14, **caractérisé en ce que** l'antenne spirale (22) forme un cadran de la pièce d'horlogerie.
